# EUROPEAN PATENT APPLICATION

(11) **EP 3 002 424 A1**
(43) Date of publication of application: **06.04.2016**
(21) Application number: 14306534.0
(22) Date of filing: 30.09.2014
(51) Int. Cl.: F01L 1/14, F01L 1/18

(54) **Mechanical system forming a cam follower or a rocker arm**

(71) Applicant: Aktiebolaget SKF, 415 50 Göteborg (SE)
(72) Inventor: Viault, Samuel, 37360 Saint-Antoine-du Rocher (FR); Berruet, Nicolas, 37260 Atannes sur Indre (FR); Champalou, François, 41150 Chaumont sur Loire (FR)
(74) Representative: Myon, Gérard Jean-Pierre

(57) **Abstract**

This mechanical system (1) forms a cam follower or a rocker arm and comprises:
- a support element (10),
- a pin (30) extending between two opposite ends (35, 36) along a first axis (X1) and supported by the support element (10), and
- a roller (40) mounted on pin (30), movable in rotation relative to the pin (30) around the first axis (X1) and adapted to roll on a cam.

The support element (10) comprises a bearing body (20) adapted to receive pin (30), and an additional retaining member (12) blocking the translation of pin (30) back and forth, along first axis (X1).

## Description

### TECHNICAL FIELD OF THE INVENTION

The invention concerns a mechanical system, forming a cam follower or a rocker arm, and comprising a pin or a roller provided with at least one recess forming a lubricant reservoir. The invention also concerns an injection pump or a valve actuator comprising such a mechanical system. The invention also concerns a method for manufacturing such a mechanical system.

### BACKGROUND OF THE INVENTION

Classically, a cam follower comprises at least a tappet, a pin and a roller. The tappet extends along a longitudinal axis, while the pin and the roller are centered on a transverse axis. The tappet is formed with two lateral flanges, delimiting an intermediate gap between them and each comprising a cylindrical bore. The roller is positioned in the intermediate gap, between both flanges and bores. The pin is fitted in the two bores, such that the roller is movable in rotation relative to the pin around its axis. The pin may be caulked, in other words plastically deformed, on both opposite ends to create a mechanical connection by press-fit in the tappet bores.

When the cam follower is in service, the roller collaborates with a cam synchronized with the internal combustion engine camshaft. The rotation of the camshaft leads to a periodic displacement of a piston of the pump that rests against the tappet, to allow fuel to be delivered. The tappet is movable back and forth along the longitudinal axis in a bore belonging to the injection pump, with the cylindrical outer surface of the tappet sliding in this bore. The roller is movable in rotation around its central axis.

As shown by example in EP-A-2 607 636, it is known to provide the tappet with two flanges having holes for supporting the ends of the pin on which the roller is mounted. The holes in the flanges each have a radial recess adapted to receive a plastically deformed radial portion of the caulked end of the pin. For assembling the cam follower, the roller is mounted between the flanges of the tappet. Then, the pin is inserted in the roller, through the holes of the flanges, the ends of the pin being supported by the flanges. Then, the ends of the pin are caulked. The caulking of the pin is a costly operation, and time consuming.

### SUMMARY OF THE INVENTION

The aim of the invention is to provide an improved mechanical system having a reduced cost.

To this end, the invention concerns a mechanical system forming a cam follower or a rocker arm, the mechanical system comprising:
- a support element,
- a pin extending between two opposite ends along a first axis and supported by the support element, and
- a roller mounted on pin, movable in rotation relative to the pin around the first axis and adapted to roll on a cam,
wherein the support element comprises a bearing body adapted to receive pin, and an additional retaining member blocking the translation of pin back and forth, along first axis.

Thanks to the invention, the translation of the pin, back and forth, is blocked by the retaining member. No caulking operation of the pin ends is required. Besides that, the retaining member, when shaped like a sleeve, provides an external guiding surface for the sliding of the mechanical system in a bore.

According to further aspects of the invention which are advantageous but not compulsory, such a mechanical system may incorporate one or several of the following features:
- Bearing member has two flanges provided with bores receiving the ends of pin.
- The two flanges are in one piece with bearing body.
- Retaining member has an annular shape centred on a second axis perpendicular to first axis.
- Retaining member has an internal cylindrical surface in contact with curved external faces of bearing member.
- Retaining member and bearing body are metallic, for example made of steel.
- Retaining member is fretted on bearing body.
- Bearing body is metallic and is not heat treated.
- Retaining member is assembled with bearing body with adhesive means.
- Retaining member has a cylindrical external guiding surface having the same diameter than an external guiding surface of support element.
- Pin is movable in translation and in rotation relative to bearing body, along first axis.
- The mechanical system comprises a rolling bearing, a sliding bearing or a bushing positioned at the interface between the pin and the roller element.

Another object of the invention is an injection pump for a motor vehicle, comprising such a mechanical system.

Another object of the invention is a valve actuator for a motor vehicle, comprising such a mechanical system.

Another object of the invention is a method for producing such a mechanical system, wherein :
- roller is disposed in bearing member, in alignment with first axis,
- pin is inserted in bearing member, in an internal bore of roller,
- retaining member is fitted on bearing member and blocks ends of pin.

### BRIEF DESCRIPTION OF THE DRAWINGS

The invention will now be explained in correspondence with the annexed figures, as an illustrative example, without restricting the object of the invention. In the annexed figures:
- Figure 1 is a front view of a mechanical system according to the invention, of the cam follower type, comprising a tappet, a pin and a roller;
- Figure 2 is a sectional view along plane II of figure 1;
- Figure 3 is a rear view of the mechanical system of figure 1;
- Figure 4 is a lateral view of the mechanical system of figure 1;
- Figure 5 is a sectional view along plane V of figure 4;
- Figures 6 is a top view of the mechanical system of figure 1; and
- Figure 7 is an exploded sectional view of the mechanical system of figure 1.

### DETAILED DESCRIPTION OF SOME EMBODIMENTS

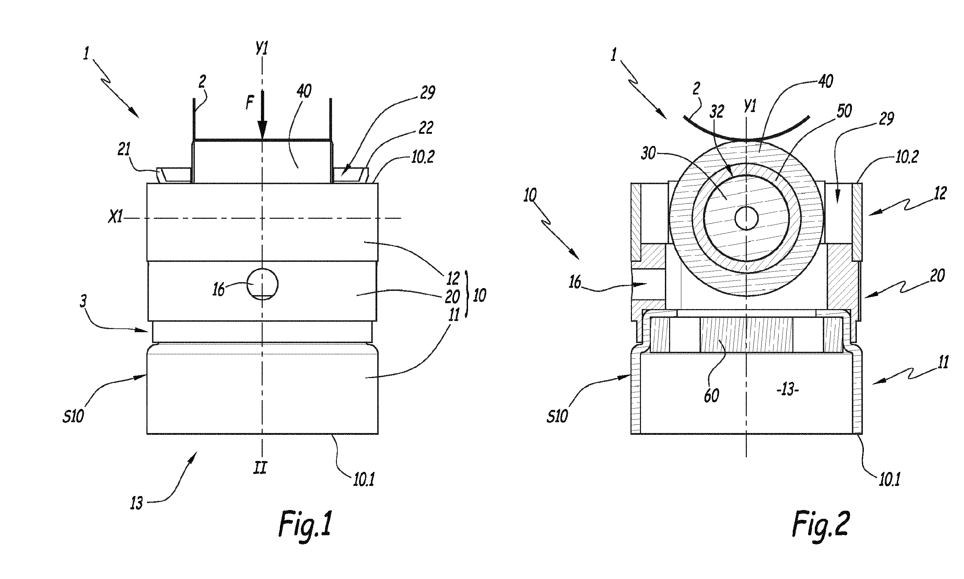

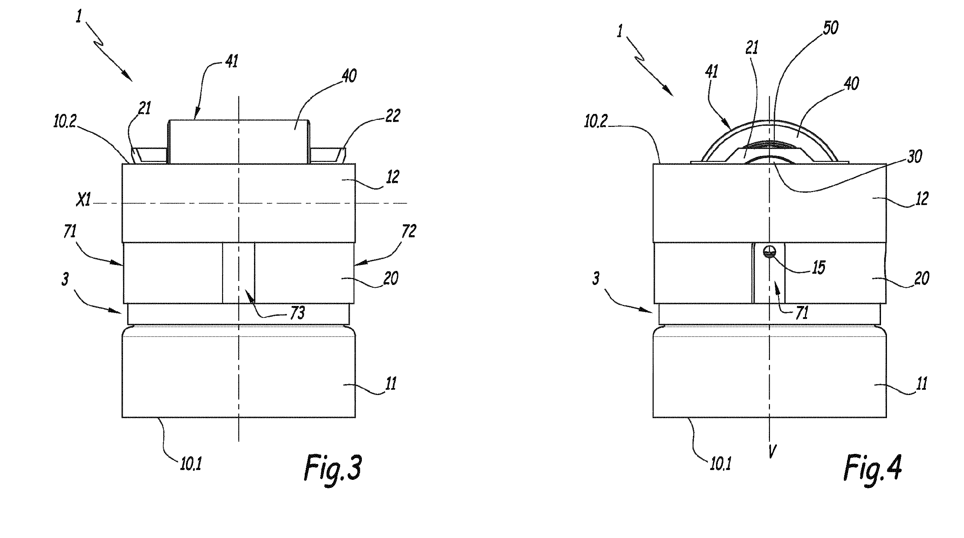

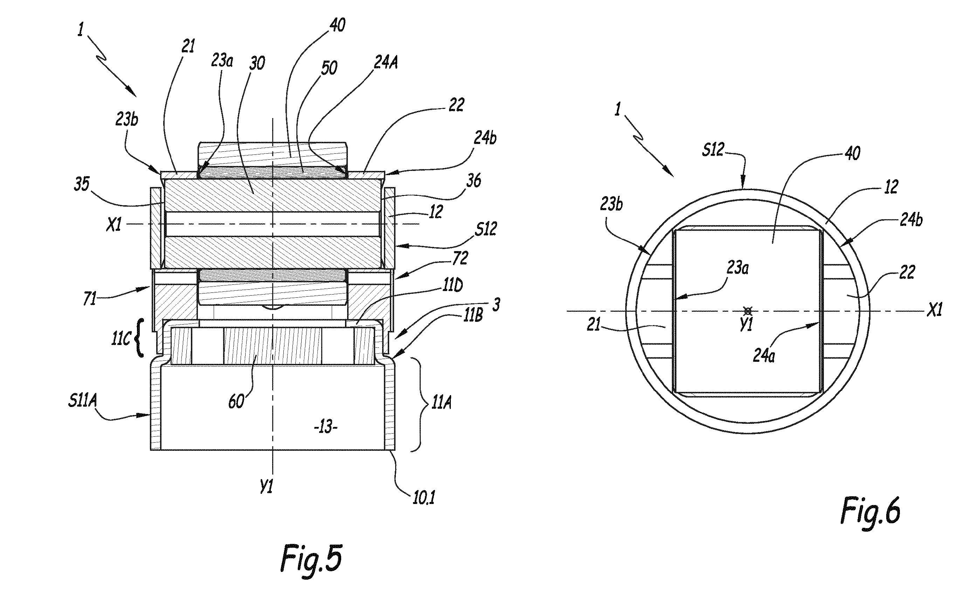

The mechanical system 1 represented on figures 1 to 7 is of the cam follower type, adapted to equip an injection pump for a motor vehicle, not shown.

System 1 comprises a tappet 10, a pin 30 and a roller 40, together forming a plain bearing. In heavy duty applications such as in diesel truck engines, there is a lack of space for the implementation of a rolling bearing, thus justifying the use of a plain bearing. Pin 30 and roller 40 are centered on a transverse axis X1, while tappet 10 is centered on a longitudinal axis Y1. Axes X1 and Y1 are perpendicular. Roller 40 is adapted to roll on a cam 2, shown on figure 1.

Tappet 10 comprises a first body part, namely a bearing part 20, interposed between a second body part, namely a bottom ring 11, and a third body part, namely a top ring or sleeve 12. First ring 11 is centered on axis Y1 and delimits a cavity 13 inside tappet 10. This cavity 13 is adapted to receive a shaft or plunger 60 for moving tappet 10 along axis Y1. Tappet 10 has a cylindrical outer surface S10, with a circular basis, centered on axis Y1 and extending along rings 11 and 12 and partly bearing body 20. Tappet 10 is movable back and forth along axis Y1, in a non-represented bore belonging to the injection pump, with surface S10 sliding in this bore. Tappet 10, in particular bearing body 20 and rings 11 and 12, are made of metal, by example steel. Material of the tappet 10 is chosen resistant to oil flow and temperature variations. Rings 11 and 12 can be made of hardened steel. Bearing body 20 is preferably not heat treated.

Along longitudinal axis Y1, tappet 10 has a fist end or bottom end 10.1 on the side of cavity 13, and a second end or top end 10.2 on the side of pin 30 and roller 40.

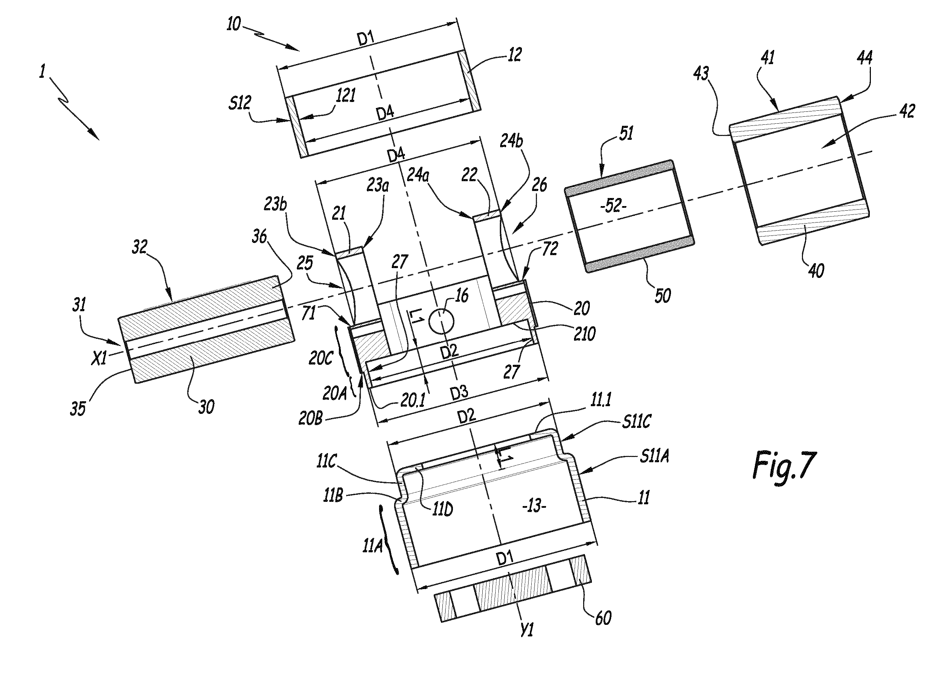

Furthermore, tappet 10 forms a support element for pin 30 and roller 40. Specifically, bearing part 20 of tappet 10 is adapted to receive pin 30, on which roller 40 is mounted. To this end, bearing part 20 comprises two lateral flanges 21 and 22 extending parallel to axis Y1 in a bifurcated manner, on both sides of axis Y1. The flanges 21 and 22 delimit an intermediate gap 29 between them. Each lateral flange 21 and 22 includes a cylindrical bore, respectively 25 and 26 (figure 7). Both bores 25 and 26 have the same diameter and extend through flanges 21 and 22 along axis X1. Flanges 21 and 22 have inner plane faces, respectively 23a and 24a, facing gap 29. Flanges 21 and 22 have outer curved faces, respectively 23b and 24b, on the opposite side of plane faces 23a and 24a.

Roller 40 has an outer cylindrical surface 41 and an internal cylindrical bore 42, both merging with transversal axis X1.

Pin 30 comprises a cylindrical outer surface 32 extending between two pin ends 35 and 36. When pin 30 is inserted in bores 25 and 26 of tappet 10, surface 32 is adjusted with bore 42 of roller 40, such that roller 40 is movable in rotation relative to pin 30 around axis X1. Both pin 30 and roller 40 axes merge with axis X1.

A bushing 50 is located at the interface between pin 30 and roller 40. Bushing 50 has an outer cylindrical surface 51 and an inner cylindrical bore 52. During assembly of system 1, surface 51 of bushing 50 is adjusted with bore 42 of roller 40, while surface 32 of pin 30 is adjusted with bore 52 of bushing 50, such that roller 40 is movable in rotation relative to pin 30 around axis X1. Tappet 10 supports pin 30, which supports bush 50, which supports roller 40. Pin 30, roller 40 and bushing 50 axes merge with axis X1.

During assembly of system 1, a radial clearance may be present between the surface 32 of pin 30 and the inner surface of each bore 25 and 26, radially to axis X1. Existence and value of clearance depends on manufacturing tolerances of pin 30, as bores 25 and 26. Preferably, clearance is as small as possible.

In a non-depicted variant, bushing 50 is eliminated or replaced by another type of sliding element or a rolling bearing such as a needle or roller bearing with a cage.

Roller 40 is adapted to roll on cam 2. More precisely surface 41 can roll on the outer surface of cam 2. When cam 2 and roller 40 are cooperating, a force F is applied on surface 41 along axis Y1.

In practice, several areas within system 1 have to be lubricated to ensure proper operation of system 1, including an interface between pin 30 and roller 40. The surfaces to be lubricated include inner surface 41 of roller 40 and outer surface 32 of pin 30, together with lateral faces 43 and 44 of roller 40 and lateral faces 23a and 24a of flanges 21 and 22.

If surfaces 23a, 24a, 32, 42, 43 and 44 are not properly lubricated, friction between flanges 21 and 22, pin 30 and tappet 40 may bring on over-heating of system 1 and accelerated ageing.

An annular lubricating groove 3 is formed on the outer surface S10 of tappet 10. Groove 3 has an annular shape, perpendicular to longitudinal axis Y1. Tappet 10 also comprises several holes and bores 15 and 16, as well as grooves 71, 72 and 73, provided for lubrication or other functions that are not subjects of the present invention.

When body 20 and bottom ring 11 are fitted together, they delimit together annular lubricating groove 3 on external surface S10 of tappet 10.

Bottom ring 11 has a first portion or lower portion 11 A having a cylindrical hollow shape, centred on longitudinal axis Y1. Lower portion 11 A delimits the lower end 10.1 of tappet 10. Lower portion 11A has an outer surface S11A of diameter D1.

Lower portion 11 A is connected to an upper portion or second portion 11 C of ring 11 via an annular shoulder 11 B centred on longitudinal axis Y1. The diameter D2 of an outer surface S11 C of upper portion 11C is strictly less than diameter D1.

Bottom ring 11 has a protrusion 11D, connected to upper portion 11C, having an annular shape and extending perpendicularly to longitudinal axis Y1, towards axis Y1.

The geometry and the dimensions of lower ring 11 are designed to fit into bearing body 20 and delimiting the groove 3.

Bearing body 20 has a cylindrical internal surface 27 opening on a lower end 20.1 of bearing body 20. A diameter of surface 27 is equal, or roughly equal, to diameter D2 of upper portion 11C of bottom ring 11. Bearing body 20 has an internal annular shoulder 210 of annular shape, connected to surface 27 and extending in a plane perpendicular to longitudinal axis Y1.

Along longitudinal axis Y1, a length L1 between lower end of bearing body 20 and shoulder 210 is equal, or roughly equal, to the length between shoulder 11B and the upper end 11.1 of ring 11. Thus, when lower ring 11 is fitted inside bearing body 20, protrusion 11 D comes into contact with shoulder 210.

Ring 11 is assembled with bearing body 20 in a tight adjustment. Alternatively, ring 11 and bearing body 20 are fretted or fitted together by adhesive means, bonding or welding.

Bearing body 20 has a lower portion 20A having an outer diameter D3 strictly less than diameter D1. Portion 20A is connected to an upper portion 20C of bearing body 20 via a shoulder 20B. Portions 20A and 20C have a cylindrical shape, centred on longitudinal axis Y1. Shoulder 20B has an annular shape and is perpendicular to longitudinal axis Y1. Upper portion 20C has a diameter slightly less than diameter D1.

The bottom of groove 3 is formed by a recessed outer surface S20A of lower portion 20A of bearing body 20. A first lateral wall of groove 3, or bottom wall, is formed by shoulder 11 B of bottom ring 11. A second lateral wall of groove 3, or top wall, is formed by shoulder 20B of bearing body 20.

Tappet 10 is made a plurality of separate parts, in particular at least two parts, so that groove 3 is not machined. Groove 3 is formed without the need of any machining or milling operation, which is more economical.

Bearing body 20 and rings 11 and 12 can be produced by casting, stamping or sintering.

Tappet 10 includes linear grooves 71, 72 and 73 parallel to longitudinal axis Y1. A lower end of each groove 71 to 73 opens into annular groove 3. An upper end of each groove 71 to 73 is clogged by upper ring 12. Grooves 71 and 72 intersect with a longitudinal plane passing through axes X1 and Y1.

Groove 73 is angularly spaced from grooves 71 and 72 of 90°. The bottom of each groove 71 and 72 is provided with a lubricating hole 15. Another lubricating hole 16 is diametrically opposed to groove 73. Lubricating holes 15 and 16 open into cavity 13.

In the embodiment depicted, tappet 10 includes three separate parts, namely body 20 and rings 11 and 12. In a variant, tappet 10 includes two separate parts, or a number of separate parts higher than three. In another variant, tappet 10 is a single piece.

Upper ring 12 has an annular shape delimited by an outer surface S12 of diameter D1. The curved faces 23b and 24b of bearing part 20 have the shape of a portion of cylinder centered on longitudinal axis Y1 and having a diameter D4 equal to, or slightly less than, the diameter of an inner cylindrical surface 121 of upper ring 12. Upper ring 12 is designed to be assembled to bearing part 20.

Upper ring 12 blocks the translation of pin 30 back and forth, along transversal axis X1. In this way, bearing body 20 is allowed to be a single piece. Flanges 21 and 22 belong to the same part. Upper ring 12 is an axial retainer for pin 30. Thus, the design of tappet 10 is simple.

Upper ring 12 is also a guiding member for the sliding of system 1 inside the body of a pump, for example. Outer surface S12 has the same diameter D1 than surface S11A of lower ring 11. Outer surface of upper portion 20C of bearing member 20 is slightly recessed radially compared to lower portion 20A, so upper portion 20C is not a guiding portion for the sliding of system 1.

Hereunder is described a method to assemble system 1.

Lower ring 11 is mounted on bearing body 20.

Bushing 50 is fitted in bore 42 of roller 40. Roller element 40 is positioned in intermediate gap 29, between flanges 21 and 22, in alignment with transversal axis X1. Lateral faces 43 and 44 of roller 40 are in contact with inner faces 23a and 23b of flanges 21 and 22.

After roller 40 is being disposed in bearing body 20, pin 30 is fitted inside the two bores 25 and 26 of flanges 21 and 22, and inside roller 40, more precisely inside inner bore 52 of bushing 50. Pin 30 is movable in rotation and in translation relative to bearing body 20, around transversal axis X1.

When pin 30 and roller 40 are fitted in tappet 10, upper ring 12 is fitted on lateral flanges 21 and 22, around roller 40 and pin 30. Upper ring 12 can be fretted on bearing body 20 or assembled by adhesive means. Upper ring 12 blocks the translation of pin 30 back and forth along transversal axis X1. No caulking operation is needed for retaining pin 30 inside tappet 10.

Upper ring 12 is an additional retaining member. By "additional", it is understood that it is not the same part as tappet 10.

Other non-show embodiments can be implemented within the scope of the invention. For example, support element 10 may have a different configuration depending on the intended application of system 1.

According to a variant of the invention, lower ring 11 is merged with bearing body 20.

Moreover, the mechanical system 1 according to the invention is not limited to a cam follower. For example, system 1 may form a rocker arm, wherein the support element 10 is an arm movable in rotation along a pivot axis parallel to axis X1.

According to another non-shown embodiment, system 1 may comprise a rolling or sliding bearing, with bearing elements positioned at the interface between pin 30 and roller 40.

Moreover, groove 3 does not necessarily extend on 360° around longitudinal axis Y1. For example, groove 3 can be semi-annular and extending on 180° around longitudinal axis Y1.

In another embodiment, groove 3 is formed between bearing body 20 and upper ring 12.

In addition, technical features of the different embodiments can be, in whole or part, combined with each other. Thus, the mechanical system 1 can be adapted to the specific requirements of the application.

## Claims

1. A mechanical system (1), forming a cam follower or a rocker arm, the mechanical system (1) comprising:
- a support element (10),
- a pin (30) extending between two opposite ends (35, 36) along a first axis (X1) and supported by the support element (10), and
- a roller (40) mounted on pin (30), movable in rotation relative to the pin (30) around the first axis (X1) and adapted to roll on a cam (2),
wherein the support element (10) comprises a bearing body (20) adapted to receive pin (30), and an additional retaining member (12) blocking the translation of pin (30) back and forth, along first axis (X1).

2. The mechanical system (1) according to claim 1, wherein bearing member (20) has two flanges (21, 22) provided with bores (25, 26) receiving the ends (35, 36) of pin (30).

3. The mechanical system (1) according to claim 2, wherein the two flanges (21, 22) are in one piece with bearing body (20).

4. The mechanical system (1) according to one of the previous claims, wherein retaining member (12) has an annular shape centred on a second axis (Y1) perpendicular to first axis (X1).

5. The mechanical system (1) according to claim 4, wherein retaining member (12) has an internal cylindrical surface (121) in contact with curved external faces (23b, 34b) of bearing member (20).

6. The mechanical system (1) according to one of the previous claims, wherein retaining member (12) and bearing body (20) are metallic, for example made of steel.

7. The mechanical system (1) according to claim 6, wherein retaining member (12) is fretted on bearing body (20).

8. The mechanical system (1) according to one of the previous claims, wherein bearing body (20) is metallic and is not heat treated.

9. The mechanical system (1) according to one of the previous claims, wherein retaining member (12) is assembled with bearing body (20) with adhesive means.

10. The mechanical system (1) according to one of the previous claims, wherein retaining member (12) has a cylindrical external guiding surface (S12) having the same diameter (D1) than an external guiding surface (S10A) of support element (10).

11. The mechanical system (1) according to one of the previous claims, wherein pin (30) is movable in translation and in rotation relative to bearing body (20), along first axis (X1).

12. The mechanical system (1) according to one of the previous claims, comprising a rolling bearing, a sliding bearing or a bushing (50) positioned at the interface (60) between the pin (30) and the roller element (40).

13. An injection pump for a motor vehicle, comprising a mechanical system (1) according to one of the previous claims 1 to 12.

14. A valve actuator for a motor vehicle, comprising a mechanical system (1) according to one of the previous claims 1 to 12.

15. A method for producing a mechanical system (1) according to one of claims 1 to 12, wherein :
- roller (40) is disposed in bearing member (20), in alignment with first axis (X1),
- pin (30) is inserted in bearing member (20), in an internal bore (42) of roller (40),
- retaining member (12) is fitted on bearing member (20) and blocks ends (35, 36) of pin (30).
